# EUROPÄISCHE PATENTSCHRIFT

(11) **EP 0 893 151 B1**
(45) Veröffentlichungstag und Bekanntmachung des Hinweises auf die Patenterteilung: **27.11.2002**
(21) Anmeldenummer: 98107934.6
(22) Anmeldetag: 30.04.1998
(51) Int. Cl.: B01D 46/02, B01D 39/18, A47L 9/14, B01D 39/16

(54) **Staubfilterbeutel**
Dust filter bag
Sac filtrant à poussières

(30) Priorität: 24.07.1997 DE 19731860
(43) Veröffentlichungstag der Anmeldung: 27.01.1999
(73) Patentinhaber: Carl Freudenberg KG, 69469 Weinheim (DE)
(72) Erfinder: Freudenberg, Ulrich, Dr., 74889 Sinsheim (DE)

(56) Entgegenhaltungen:
- EP-A- 0 060 677
- EP-A- 0 338 479
- EP-A- 0 635 297
- WO-A-97/30772
- DE-A- 19 606 718
- GB-A- 1 362 375
- US-A- 5 080 702
- US-A- 5 647 881

## Beschreibung

Die Erfindung betrifft einen Staubfilterbeutel aus einer mit einer Papierschicht zusammenlaminierten Faserschicht.

Staubfilterbeutel, die aus einem porösen Vliesstoff und einem Filterpapier bestehen, sind aus der EP 0 635 297 A1 bekannt und werden zu doppellagigen Staubfilterbeuteln verarbeitet. Als Vliesstoff kann ein Meltblown-Feinfaservlies zum Einsatz kommen, das die Innenseite des Staubfilterbeutels bedeckt und den Staubfilterbeutel verstärkt. Der Verstärkungseffekt ist nicht befriedigend.

Weitere Staubfilterbeutel sind aus der EP 0 338 479 A bekannt. Der dort beschriebene Staubfilterbeutel besteht aus einer Filterpapier-Außenlage und einem innenliegenden Vliesstoff. Der Vliesstoff ist als Feinfaservliesstoff ausgebildet und ebenfalls auf der Anströmseite angeordnet. Dabei können die feinen Fasern des Feinfaservliesstoffs im thermoplastischen Zustand direkt auf dem Filterpapier abgelegt und mit diesem verbunden sein.

Der Feinfaservliesstoff kann mit einem Stützelement verbunden sein, welches ebenfalls aus Vliesstoff besteht.

Ein Nachteil der bekannten Staubfilterbeutel besteht darin, daß bei dem Aufsaugen von Wasser oder sonstiger mit der zu reinigenden Luft angesaugter Flüssigkeit die Filterpapieraußenlage aufweicht und ihre Festigkeit einbüßt, wodurch beim Staubsaugen oder Herausnehmen des Staubfilterbeutels ein Aufreißen und eine Verschmutzung der Umgebung zu befürchten ist. Die Filterwirkung in bezug auf Feinstpartikel ist wenig befriedigend.

Das Dokument EP-A 0060677 offenbart ein Komposit-Filtermedium, welches aus einer innenseitigen Filterschicht aus Papier und einer außenseitigen Stützschicht aus synthetischen Fasern bestehen kann.

Aus dem Dokument US 5,647,881 ist weiterhin ein Staubsaugerbeutel bekannt, der aus mehreren Schichten besteht, die folgende Schichten umfassen:
a) eine äußere Stützschicht beispielsweise aus Papier,
b) mindestens einer aus aufgeladenen Fasern bestehenden Schicht und
c) einer inneren Diffusionsschicht, die nicht mit der Filterschicht verbunden ist mit Ausnahme des Randes und die eine Luftdurchlässigkeit von mindestens 50 m³/min/m², eine Reißfestigkeit von mindestens 0,1 kg/cm besitzt und aus Fasern mit einem effektiven Fadendurchmesser von mindestens 10 µm besteht.

Die ältere Patentanmeldung WO 97/30772, die für die gleichbenannten Staaten ES, FR, GB und IT zum Stand der Technik gehört, offenbart eine mehrlagige Filtertüte, die aus einer Feinfaservlies-Lage (A) und einer Lage (B) besteht, die aus einer zur Aufnahme von mechanischen Beanspruchungen stabilisierenden Kunststoff-Wirrfaser-Anordnung gebildet ist und denen auf der Rohgasseite eine aus Papier bestehende Lage (C) vorgelagert sein kann.

Ein Nachteil der bekannten Staubfilterbeutel besteht darin, daß bei dem Aufsaugen von Wasser oder sonstiger mit der zu reinigenden Luft angesaugter Flüssigkeit die Filterpapierlage aufweicht und ihre Festigkeit einbüßt, wodurch beim Staubsaugen oder Herausnehmen des Staubfilterbeutels ein Aufreißen und eine Verschmutzung der Umgebung zu befürchten ist. Die Filterwirkung in bezug auf Feinstpartikel ist wenig befriedigend.

Der Erfindung liegt die Aufgabe zugrunde, einen Staubfilterbeutel der eingangs genannten Art derart weiterzuentwickeln, daß eine hohe Filterwirkung, d. h. ein hoher Abscheidungsgrad erhalten wird. Hierzu müssen die Filterporen des Staubfilterbeutels aber auch nicht verstopfen, damit eine hohe Saug- oder Blasleistung, beispielsweise eines Staubsaugers, erhalten bleibt und ein Auswechseln des Staubfilterbeutels vor Erreichen einer bestimmten Füllmenge allein deswegen vermieden wird.

Weiterhin müssen die Staubfilterbeutel eine ausreichende mechanische Festigkeit aufweisen, um während der Anbringung oder in gefülltem Zustand nicht aufzureißen oder zu platzen. Auch für die Herstellung der Beutel mittels mehrerer Faltvorgänge ist eine entsprechende Festigkeit erforderlich.

Diese Aufgabe wird durch die Merkmale des Anspruchs 1 gelöst.

Der erfindungsgemäße Staubfilterbeutel aus einer mit einer Papierschicht zusammenlaminierten Faserschicht ist so aufgebaut, daß die Faserschicht aus synthetischen, polymeren Fasern besieht und auf der Reingasseite der Papierschicht angeordnet ist, und daß die Faserschicht verschmolzene Polymerbereiche enthalten und durch diese Bereiche zusätzlich in sich selbst verfestigt und mit der Papierschicht verbunden ist.

Dabei hat es sich als vorteilhaft bewährt, wenn die Polymerbereiche fensterartig verschmolzen sind. Hierdurch werden Verfestigungszonen erhalten, die dem Vliesstoff eine verbesserte Festigkeit verleihen, insbesondere wenn die Polymerbereiche balkenförmig gestaltet oder ausgebildet sind.

Die Polymerbereiche können zur Bildung von Staubkammern nach Art eines Waben- oder Waffelmusters verteilt sein. Während sich das Papier aufgrund seiner Papierbindung gegenüber dem darauf während der bestimmungsgemäßen Verwendung des Staubfilterbeutels lastenden Luftdruck starr und unnachgiebig verhält, ergibt sich auf der Reinluftseite eine elastische Deformierung der Faserschicht in den Zwischenzonen des Waben- oder des Waffelmusters, was zur Bildung von Staubkammern führt, in denen sich Feinststäube ansammeln können. Insbesondere in bezug auf die Abscheidung von Allergenen hat sich daher eine solche Ausbildung ausgezeichnet bewährt.

Die Polymerbereiche können zumindest teilweise in die Papierschicht penetriert sein, in der sie eine zusätzliche und zähharte Verfestigung der Faserstruktur bewirken. Die brüchige Struktur der Papierbindung wird hierdurch positiv verändert. Die Feuchtigkeitsbeständigkeit und/oder Weiterreißfestigkeit der Papierschicht wird durch die Polymerbereiche unbedingt verbessert.

Auf der anderen Seite kann der für die Erzeugung von Faltungen vorteilhafte Einsatz der Papierschicht trotz der Möglichkeit der Wasseraufnahme beibehalten werden. Durch die Papierschicht wird nämlich die Faltbarkeit des Staubfilterbeutels gegenüber einer reinen Faserschicht aus Polymerfasern erst ermöglicht. Die Faltbarkeit kann durch ein dichteres Muster der verschmolzenen Polymerbereich im Bereich der Kanten verbessert werden.

Die die Polymerbereiche bildenden Balken müssen nicht zusammenhängend ausgebildet sein, sondern können auch untereinander versetzt, das heißt ohne Berührung angeordnet werden.

Dadurch, daß die Faserschicht aus synthetischen, polymeren Fasern besteht und auf der Reingasseite der Papierschicht angeordnet ist, führt ein Festigkeitsverlust der Papierschicht nicht mehr zur Beschädigung des Staubfilterbeutels. Selbst bei einem Aufreißen der Papierschicht im Innern des Staubfilterbeutels wird ein Austritt von Staubteilchen aus dem Inneren des Staubfilterbeutels durch die außenliegende Faserschicht vermieden. Die Fasern können elektrostatisch aufgeladen sein, um eine Verbesserung der Filterwirkung in bezug auf Feinststäube zu erzielen.

Die Faserschicht kann aus einem zumindest eigenfesten Vliesstoff bestehen, um sicher zu stellen, daß auch bei völliger Zerstörung der Papierschicht der Staubfilterbeutel ausreichend stabil und filterwirksam bleibt. Eine hygienische Entsorgung des zumindest teilweise mit Staub gefüllten Staubfilterbeutels ist somit auch in solchen Fällen möglich.

Der Vliesstoff kann durch eine gegenseitige Verklebung und/oder Verschlingung der ihn bildenden Fasern und/oder Fäden feuchtigkeitsstabil verfestigt sein.

Ergänzend zu der auf der Reingasseite angeordneten Faserschicht aus polymeren Fasern kann gegebenenfalls auf der Staubluftseite eine ergänzende, weitere Faserschicht aus synthetischen, polymeren Fasern vorgesehen sein und eine weitere Verbesserung bestimmter Eigenschaften bewirken. Hierdurch muß aber eine Verteuerung des Staubfilterbeutels in Kauf genommen werden. Im Rahmen der vorliegenden Erfindung wird daher eine Ausführung bevorzugt, bei der nur auf der Reinluftseite eine Schicht aus synthetischen, polymeren Fasern vorgesehen ist.

In einer Weiterbildung ist der Staubfilterbeutel so ausgebildet, daß die Faserschicht zumindest zwei Teilschichten umfaßt. Das ist dann von besonderem Vorteil, wenn die Teilschichten unterschiedliche Funktionen erfüllen sollen.

Insbesondere kann die von der Papierschicht des Staubfilterbeutels abgewandte Teilschicht aus einem Spinnvlies bestehen. Dieses Spinnvlies weist in der Regel eine hohe Widerstandsfähigkeit gegen Abrieb auf. Dies ist dann wichtig, wenn der Staubfilterbeutel während der Herstellung, der Anbringung oder des Betriebs mit rauhen Oberflächen in Kontakt kommt.

Weiterhin kann zumindest eine an die Papierschicht angrenzende Teilschicht vorhanden sein, die aus Mikrofasern besteht. In dieser Schicht, die aus einem Melt-Blown-Vlies bestehen kann, werden verbesserte Filtereigenschaften insbesondere in bezug auf Feinststäube erreicht, wodurch der Einsatzbereich des Staubfilterbeutels ausgedehnt wird.

Eine besonders gute Reinigungswirkung bei ausreichender mechanischer Festigkeit des Staubfilterbeutels erhält man dann, wenn die aus Mikrofasern bestehende Faserschicht ein Flächengewicht von 5 g/m² bis 40 g/m² (ISO 536) hat bei einem Gesamtgewicht der Faserschicht von 5 bis 50 g/m.

Die Papierschicht hat in vorteilhafter Weise ein Flächengewicht von 20 g/m² bis 100 g/m² s (ISO 536).

Die Luftdurchlässigkeit des gebrauchsfertigen Produkts liegt bei 100 bis 300 l/m² s bei einem Differenzdruck von 200 Pa (DIN 53887).

Ein Ausführungsbeispiel der Erfindung ist in der Zeichnung dargestellt. Es zeigt die:
- Fig. 1: einen Schnitt durch einen dreilagigen Staubfilterbeutel, die
- Fig. 2: eine Draufsicht auf die von der Faserschicht gebildete Außenseite des Staubfilterbeutels mit den verschmolzenen Polymerbereichen, die
- Fig. 3: einen Schnitt durch den dreilagigen Staubfilterbeutel aus Fig. 2 im Bereich der verschmolzenen Polymerbereiche.

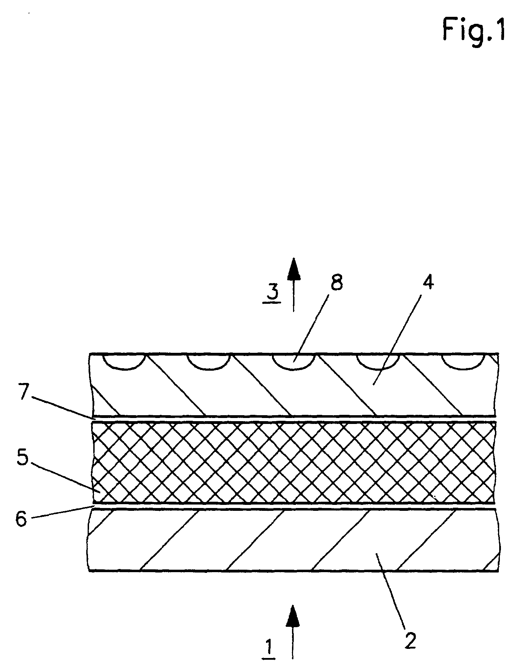

In Fig. 1 ist ein Staubfilterbeutel gemäß der Erfindung dargestellt. Er besteht aus einer der Staubgasseite oder Ansaugseite 1 zugewandten Papierschicht 2.

Der Reinluftseite 3 zugewandt ist eine Faserschicht aus polymerem Material, die aus einem aus thermoplastischen Fasern bestehenden Spinnvliesstoff 4 gebildet ist.

Zwischen der Papierschicht 2 und dem Spinnvliesstoff 4 befindet sich eine weitere Faserschicht aus polymerem Material, die aus einem Melt-Blown-Vliesstoff 5 aus thermoplastischen Fasern besteht.

Die Papierschicht 2 und der Melt-Blown-Vliesstoff 5 liegen im wesentlichen lose aufeinander, so daß ein Zwischenraum 6 vorhanden ist. Ebenso liegt der Spinnvliesstoff 4 lose auf dem Melt-Blown-Vliesstoff 5 auf, wodurch in Teilbereichen ein Zwischenraum 7 eingeschlossen wird.

Zur Erhöhung der Festigkeit des Spinnvliesstoffes 4 kann dieser durch Punktverschweißung an örtlich beabstandeten Stellen verfestigt sein, wodurch Oberflächenstrukturen 8 vorhanden sind.

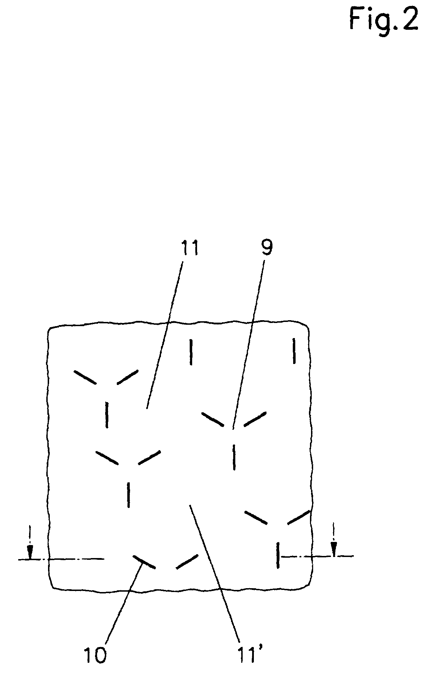

In Fig. 2 zeigt die reingasseitige Oberfläche des Staubfilterbeutels. Man erkennt die verschmolzenen Polymerbereiche 9, welche in Form von Balken 10 vorliegen. Die Balken 10 sind untereinander versetzt angeordnet und berühren einander nicht. Sie können an sich einander in jedem beliebigen Muster zugeordnet und beispielsweise ein Waffel- oder ein Wabenmuster bilden. Zweckmäßigerweise sind die einzelnen Kammern hierbei durch Querverbindungen ineinander übergehend ausgebildet, um die insgesamt zur Verfügung stehende Filterfläche optimal zu nutzen und Druckspitzen in einzelnen Kammern zu vermeiden. Die Balkenstrukturen können zu diesem Zweck auch insgesamt durch eine Aufeinanderfolge von einzelnen Verschweißungszonen gebildet sein, die einen Abstand voneinander haben.

Die Balken 10 grenzen somit Staubtaschen 11, 11' ein, welche aufgrund der unzusammenhängenden Struktur der Polymerbereiche 9 beziehungsweise der Balken 10 untereinander verbunden sind und ineinander übergehen.

Da die Staubtaschen 11 nicht gegenseitig abgeschlossen sind, ist auch ein Materialaustausch von einer Staubtasche 11 in eine benachbarte Staubtasche 11' möglich, beispielsweise nach eingetretener Verstopfung der Poren der einen Kammer, wenn diejenigen einer benachbarten Kammer noch verfügbar sind.

Verschiedenste Formen der Anordnung der Balken oder anderer Polymerbereiche sind unter diesem Gesichtspunkt denkbar, um die Festigkeit zu erhöhen und um gleichzeitig eine Abgrenzung von Staubtaschen gegeneinander zuzulassen.

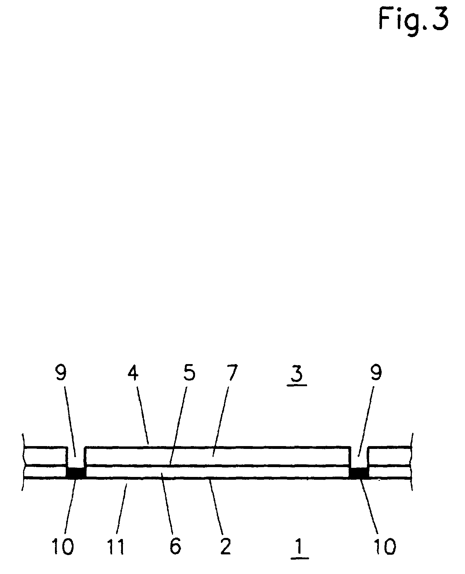

Die Fig. 3 zeigt einen Schnitt im Bereich der Polymerbereiche 9 beziehungsweise der Balken 10. Die Polymerbereiche 9 können durch Ultraschallkalandrierung erzeugt werden. Dabei wird das thermoplastische Material des Spinnvlieses 4 und des Meltblown-Vlieses 5 an vorherbestimmten Stellen zum Schmelzen gebracht und unter hohem Druck mit der Papierschicht 2 verbunden. Die Art des Papiers ist an sich ohne Bedeutung, sofern hinreichende Filtereigenschaften vorhanden sind.

Das geschmolzene thermoplastische Material des Spinnvliesstoffes 4 und des Meltblown-Vliesstoffs 5 dringt dabei zumindest teilweise in die Papierschicht 2 ein. In den Polymerbereichen 9 sind die Eigenschaften des Spinnvliesstoffs 4 und des Meltblown-Vliesstoffs 5 wegen der Kalandrierung nicht mehr erhalten, insbesondere sind diese Bereiche nicht mehr oder nur noch unwesentlich filteraktiv.

Zwischen den Polymerbereichen 9 werden von den Zwischenräumen 6 die Staubtaschen 11 gebildet, die den Feinststaub soweit aufnehmen, wie dieser nicht unmittelbar in dem Papier bzw. in dem Meltblown-Vliesstoffs 5 gespeichert wird. Zum Schutz des gegen Abrieb empfindlichen Meltblown-Vliesstoffs 5 dient der Spinnvliesstoff 4 mit höheren Festigkeitswerten und dafür relativ geringerer Filterwirkung. Im wesentlichen hat er die Aufgabe, das Meltblown-Vlies 5 vor Abrieb zu schützen und dem Staubfilterbeutel 12 eine wesentlich verbesserte Reißfestigkeit unter Vermeidung einer nennenswerten Beeinträchtigung der Filterwirkung insbesondere bei eintretender Benetzung zu verleihen. Es wird insbesondere vermieden, daß die Papierschicht 2 des Staubfilterbeutels 12 reißt und seine Filterwirkung völlig einbüßt. Es ist sogar möglich, daß die Papierschicht 2 nach eingetretener Benetzung während der bestimmungsgemäßen Verwendung wieder trocknet, ohne daß sich eine nennenswerte Beeinträchtigung der Filterwirkung ergibt.

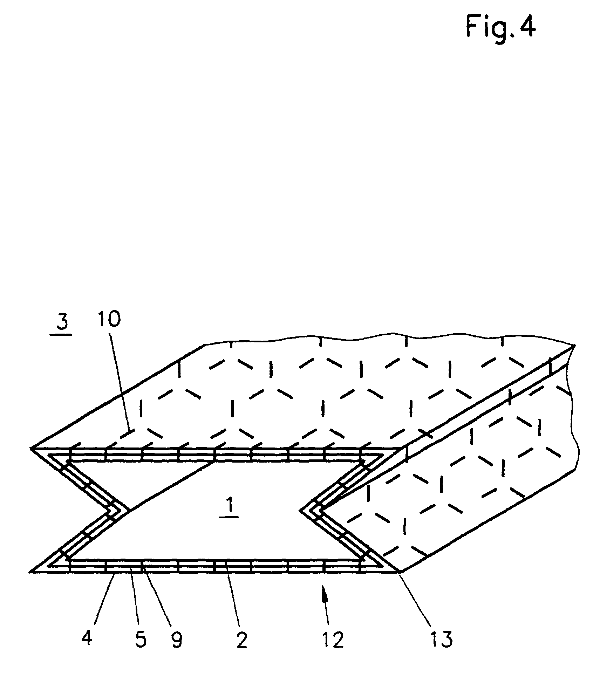

In Fig. 4 ist ein dreilagiger Staubfilterbeutel 12 mit mehreren Faltungen 13 dargestellt. Die Papierschicht 2, das Spinnvlies 4 und das Meltblown-Vlies 5 sind nicht ineinandergesteckt sondern, ausgehend von einem Flächenmaterial, durch gemeinsames Falten zu dem Staubfilterbeutel 12 umgeformt worden.

Die Verbindung der Papierschicht 2, des Spinnvlieses 4 und des Meltblown-Vlieses 5 erfolgt über die Polymerbereiche 9. Gelangt Flüssigkeit in den Innenraum, der durch die der Staubluftseite zugewandten Papierschicht 2 begrenzt wird und weicht als Folge davon die Papierschicht 2 auf, so hält das Spinnvlies 4 den Staubfilterbeutel 12 somit zuverlässig zusammen.

Grundsätzlich kann an die Stelle des Spinnvliesstoffes 4 und des Meltblown-Vliesstoffs 5 ein einziger Vliesstoff aus polymeren Fasern treten, wenn die Filtereigenschaften und Festigkeitseigenschaften genügen.

## Patentansprüche

1. Staubfilterbeutel aus einer mit einer Papierschicht (2) zusammenlaminierten Faserschicht, **dadurch gekennzeichnet, daß** die Faserschicht (4,5) aus synthetischen, polymeren Fasern besteht und auf der Reingasseite (3) der Papierschicht (2) angeordnet ist, und daß die Faserschicht (4,5) verschmolzene Polymerbereiche (9) enthält und durch die Polymerbereiche (9) zusätzlich in sich selbst verfestigt und mit der Papierschicht (2) verbunden ist.

2. Staubfilterbeutel nach Anspruch 1, **dadurch gekennzeichnet daß** die Polymerbereiche (9) fensterartig ausgebildet sind.

3. Staubfilterbeutel nach einem der Ansprüche 1 oder 2, **dadurch gekennzeichnet, daß** die Polymerbereiche (9) balkenförmig gestaltet oder verteilt sind.

4. Staubfilterbeutel nach einem der Ansprüche 1 bis 3, **dadurch gekennzeichnet, daß** die Polymerbereiche (9) zur Bildung von Staubkammern (11) nach Art eines Waben- oder Waffelmusters verteilt sind.

5. Staubfilterbeutel nach einem der Ansprüche 1 bis 4, **dadurch gekennzeichnet, daß** die Polymerbereiche (9) zumindest teilweise in die Papierschicht (2) penetriert sind.

6. Staubfilterbeutel nach einem der Ansprüche 1 bis 5, **dadurch gekennzeichnet, daß** die Feuchtigkeitsbeständigkeit und/oder Weiterreißfestigkeit der Papierschicht (2) durch die Polymerbereiche (9) verbessert ist.

7. Staubfilterbeutel nach einem der Ansprüche 1 bis 6, **dadurch gekennzeichnet, daß** die Fasern elektrostatisch aufgeladen sind.

8. Staubfilterbeutel nach einem der Ansprüche 1 bis 7, **dadurch gekennzeichnet, daß** die Faserschicht (4,5) aus einem zumindest eigenfesten Vliesstoff besteht.

9. Staubfilterbeutel nach einem der Ansprüche 1 bis 8, **dadurch gekennzeichnet, daß** der Vliesstoff durch eine gegenseitige Veklebung und/ oder Verschlingung der ihn bildenden Fasern und/oder Fäden verfestigt ist.

10. Staubfilterbeutel nach einem der Ansprüche 1 bis 9, **dadurch gekennzeichnet, daß** die Faserschicht (4, 5) zumindest zwei Teilschichten umfaßt.

11. Staubfilterbeutel nach Anspruch 10, **dadurch gekennzeichnet, daß** die von der Papierschicht (2) abgewandte Teilschicht (4) aus einem Spinnvliesstoff besteht.

12. Staubfilterbeutel nach Anspruch 10 oder 11, **dadurch gekennzeichnet, daß** zumindest eine an die Papierschicht (2) angrenzende Teilschicht (5) vorhanden ist, die aus Mikrofasern besteht.

13. Staubfilterbeutel nach Anspruch 12, **dadurch gekennzeichnet, daß** die aus Mikrofasern bestehende Teilschicht (5) ein Flächengewicht von 5 bis 40 g/m² aufweist.

14. Staubfilterbeutel nach einem der Ansprüche 1 bis 13, **dadurch gekennzeichnet, daß** die Faserschicht (4,5) insgesamt ein Flächengewicht von 5 g/m² bis 50 g/m² hat.

15. Staubfilterbeutel nach einem der Ansprüche 1 bis 14, **dadurch gekennzeichnet, daß** die Papierschicht (2) ein Flächengewicht von 20 g/m² bis 100 g/m² hat.

16. Staubfilterbeutel nach einem der Ansprüche 1 bis 15, **dadurch gekennzeichnet, daß** der Staubfilterbeutel als Staubsaugerbeutel (1) ausgebildet ist.

## Claims

1. A dust filter bag made of a fibrous layer laminated together with a paper layer (2), **characterized in that** the fibrous layer (4, 5) consists of synthetic, polymeric fibres and is arranged on the pure-gas side (3) of the paper layer (2), and **in that** the fibrous layer (4, 5) contains fused polymer areas (9) and, by means of the polymer areas (9), is additionally inherently strengthened and connected to the paper layer (2).

2. A dust filter bag according to claim 1, **characterized in that** the polymer areas (9) are designed in the manner of windows.

3. A dust filter bag according to either of claims 1 and 2, **characterized in that** the polymer areas (9) are configured or distributed in the manner of bars.

4. A dust filter bag according to one of claims 1 to 3, **characterized in that** the polymer areas (9) are distributed in the manner of a honeycomb or waffle pattern in order to form dust chambers (11).

5. A dust filter bag according to one of claims 1 to 4, **characterized in that** the polymer areas (9) penetrate at least partly into the paper layer (2).

6. A dust filter bag according to one of claims 1 to 5, **characterized in that** the moisture resistance and/or tear propagation strength of the paper layer (2) is improved by the polymer areas (9).

7. A dust filter bag according to one of claims 1 to 6, **characterized in that** the fibres are electrostatically charged.

8. A dust filter bag according to one of claims 1 to 7, **characterized in that** the fibrous layer (4, 5) consists of an at least inherently strong nonwoven.

9. A dust filter bag according to one of claims 1 to 8, **characterized in that** the nonwoven is strengthened by means of mutual adhesive bonding and/or intertwisting of the fibres and/or filaments forming it.

10. A dust filter bag according to one of claims 1 to 9, **characterized in that** the fibrous layer (4, 5) comprises at least two part layers.

11. A dust filter bag according to claim 10, **characterized in that** the part layer (4) facing away from the paper layer (2) consists of a spunbonded nonwoven.

12. A dust filter bag according to claim 10 or 11, **characterized in that** there is at least one part layer (5) which adjoins the paper layer (2) and consists of microfibres.

13. A dust filter bag according to claim 12, **characterized in that** the part layer (5) consisting of microfibres has a weight per unit area of 5 to 40 g/m².

14. A dust filter bag according to one of claims 1 to 13, **characterized in that** the fibrous layer (4, 5) has overall a weight per unit area of 5 g/m² to 50 g/m².

15. A dust filter bag according to one of claims 1 to 14, **characterized in that** the paper layer (2) has a weight per unit area of 20 g/m² to 100 g/m².

16. A dust filter bag according to one of claims 1 to 15, **characterized in that** the dust filter bag is designed as a vacuum cleaner bag (1).

## Revendications

1. Sac filtrant à poussières constitué d'une couche de fibres directement appliquée sur une couche de papier (2), **caractérisé en ce que** la couche de fibres (4, 5) est composée de fibres synthétiques polymères et est placée sur le côté gaz épuré (3) de la couche de papier (2) et **en ce que** la couche de fibres (4, 5) comporte des zones polymères (9) fondues ensemble et est en outre renforcée en elle-même par lesdites zones polymères (9) et reliée à la couche de papier (2).

2. Sac filtrant à poussières selon la revendication 1, **caractérisé en ce que** les zones polymères (9) sont réalisées sous forme de fenêtres.

3. Sac filtrant à poussières selon l'une des revendications 1 ou 2, **caractérisé en ce que** les zones polymères (9) sont réalisées ou réparties en forme de barre.

4. Sac filtrant à poussières selon l'une des revendications 1 à 3, **caractérisé en ce que** les zones polymères (9), en vue de constituer des chambres de poussière (11), sont réparties sous forme de dessin en nid d'abeilles ou à gaufres.

5. Sac filtrant à poussières selon l'une des revendications 1 à 4, **caractérisé en ce que** les zones polymères (9) sont noyées au moins partiellement dans la couche de papier (2).

6. Sac filtrant à poussières selon l'une des revendications 1 à 5, **caractérisé en ce que** la résistance à l'humidité et/ou à la propagation du déchirement de la couche de papier (2) est améliorée par les zones polymères (9).

7. Sac filtrant à poussières selon l'une des revendications 1 à 6, **caractérisé en ce que** les fibres sont chargées électrostatiquement.

8. Sac filtrant à poussières selon l'une des revendications 1 à 7, **caractérisé en ce que** la couche de fibres (4, 5) est composée d'un non-tissé au moins résistant par lui-même.

9. Sac filtrant à poussières selon l'une des revendications 1 à 8, **caractérisé en ce que** le non-tissé est renforcé par un contre-collage et/ou entrelacement des fibres et/ou fils le constituant.

10. Sac filtrant à poussières selon l'une des revendications 1 à 9, **caractérisé en ce que** la couche de fibres (4, 5) comprend au moins deux couches partielles.

11. Sac filtrant à poussières selon la revendication 10, **caractérisé en ce que** la couche partielle (4) opposée à la couche de papier (2) est composée d'un non-tissé filé.

12. Sac filtrant à poussières selon la revendication 10 ou 11, **caractérisé en ce qu'**il existe au moins une couche partielle (5) adjacente à la couche de papier (2), qui est composée de microfibres.

13. Sac filtrant à poussières selon la revendication 12, **caractérisé en ce que** la couche partielle (5) composée de microfibres a un grammage de 5 à 40 g/m².

14. Sac filtrant à poussières selon l'une des revendications 1 à 13, **caractérisé en ce que** la couche de fibres (4, 5) a au total un grammage de 5 g/m² à 50 g/m².

15. Sac filtrant à poussières selon l'une des revendications 1 à 14, **caractérisé en ce que** la couche de papier (2) a un grammage de 20 g/m² à 100 g/m².

16. Sac filtrant à poussières selon l'une des revendications 1 à 15, **caractérisé en ce que** le sac filtrant à poussières est réalisé comme sac aspirateur (1).
